Europäisches Patentamt

(19) European Patent Office

Office européen des brevets

(11) Publication number: **0 001 501**
**B1**

(12) **EUROPEAN PATENT SPECIFICATION**

(45) Date of publication of patent specification: **25.08.82**

(21) Application number: **78300451.8**

(22) Date of filing: **04.10.78**

(51) Int. Cl.³: **C 08 L 97/02,** B 29 J 5/00, B 27 D 1/04

(54) Method of bonding lignocellulosic material.

(30) Priority: **04.10.77 US 839462**

(43) Date of publication of application:
**18.04.79 Bulletin 79/8**

(45) Publication of the grant of the patent:
**25.08.82 Bulletin 82/34**

(84) Designated Contracting States:
**BE CH DE FR GB LU NL SE**

(56) References cited:
**DE - A - 1 905 054**
**DE - A - 2 506 346**
**GB - A - 925 524**
**US - A - 2 964 416**

(73) Proprietor: **Jansky, John, Dr.**
**254 rue Lecourbe**
**F-75015 Paris (FR)**

(73) Proprietor: **Stofko, John, Dr.**
**36 West 320 River Grange Road**
**St. Charles Illinois 60174 (US)**

(72) Inventor: **Stofko, John, Dr.**
**36 West 320 River Grange Road**
**St. Charles Illinois 60174 (US)**

(74) Representative: **Bradbrook, Geoffrey William et al,**
**Raworth, Moss & Cook 36 Sydenham road**
**Croydon Surrey CR0 2EF (GB)**

Courier Press, Leamington Spa, England.

## Method of bonding lignocellulosic material

This invention relates to the bonding together of solid lignocellulosic materials particularly of wood.

Bonding of lignocellulosic materials, such as wood, is widely used commercially, such as in the manufacture of plywood and board from particulate wood. In present commercial bonding procedures, adhesives such as urea or phenol formaldehyde are employed, which are spread or otherwise applied to the surface of the material, and penetrate the wood structure whereby bonding is effected by the adhesive.

Procedures have been proposed to effect such bonding by chemical reactions between reagents and the wood itself, but have not met commercial acceptance. Thus, U.S. Patents in the Names of Willey et al 2,495,043 and Wilson 2,639,994 suggests the treatment of wood with acid, followed by pressing. Neither processes achieves satisfactory results, i.e. bonding of adequate strength, possibly because, at any reasonable pressure, i.e. pressure at which the cellular structure of wood is not collapsed, only a fraction of the surfaces to be bonded come into contact because of the uneven and cellular character of the wood surface.

Acids have an hydroytic effect upon cellulose of wood and thus cause permanent loss in strength. For example, treating of wood in an autoclave with 0.5% hydrochloric acid at 9.27 kg/cm$^2$ pressure which correspond to 175°C temperature for 15 minutes yields 22% of simple sugars by weight of the wood. Hydrolysis of wood carbohydrates to sugars results in significant loss of strength because, besides partial transformation of carbohydrates to sugars, unhydrolyzed carbohydrates are depolymerized to a high degree which means splitting to shorter molecular chain fragments. It is not possible to confine this hydrolytic degradation to a thin surface layer with the intention of producing a "bonding layer" without affecting adjacent layers. Those adjacent layers are always at least partially degraded with significantly decreased wood strength.

Likewise, Salisbury U.S. Patent 2,204,384, does not produce bonding which is resistant to cold or hot water. Moreover, bonding adhesive is applied in cold conditions. Starch and sucrose are stabilized by non-volatile acids, mixed at moderate temperatures, then cooled to produce a water-soluble adhesive in powder form which is thereafter diluted in water before use.

West German Patent Publication 1,905,054 describes a mixture for producing a heat-hardenable bonding agent characterized in that it contains, as important constituents, a saccharide and a catalyst which converts the saccharide in the warm state into a polymerisate which is insoluble or only slightly soluble. It mentions a mixture suitable for bonding wood containing 1% of iron chloride, 5% or 85% phosphoric acid and 94% sugar cane molasses.

According to the present invention, there is provided a method of bonding solid lignocellulosic materials and thereby producing a waterproof bond which comprises providing on a surface of said solid lignocellulosic material an adhesive free bonding material consisting essentially of at least one sugar, starch or mixture thereof and an amount sufficient to catalyze transformation of the sugar or starch of a catalyst capable of transformation of the sugar or starch to cause waterproof bonding of adjacent lignocellulosic surfaces by means of the intermediate layer of adhesive free bonding material therebetween, said catalyst comprising a mixture of an alkali and a compound selected from the group consisting of dimethyl formamide with iodine, dimethyl sulfoxide, propylene oxide with ethylene glycol and zinc chloride, aluminium chloride, ammonium chloride, ammonium nitrate, sodium nitrate, potassium nitrate, ammonium sulfate, potassium tartrate, sodium phosphate, calcium phosphate, sodium sulfate, zinc chloride, diammonium phosphate, superphosphate and mixtures thereof so that said bonding material will not decrease pH after heating of the solid lignocellulosic material to below 3.5, and pressing surfaces of the lignocellulosic material together at an elevated temperature and for a time sufficient to effect said bonding by said transformation reactions of the sugar or starch and wherein the time, temperature and pressure are sufficient to produce a waterproof bond.

The method of the invention may be used for manufacture of laminates, plywood and composite products from particulate wood without the use of traditional adhesives. By means of the present method any lignocellulosic material can be bonded, regardless of size and shape.

It is believed that bonding is created by chemical transformation of the sugars and starches which are applied to the wood surface and possibly by coupling of their transformation products to wood lignin.

The chemical reactions involved in the bonding system in the present invention have not been fully elucidated and applicant does not wish to be bound to any theory. However, theoretically, several reaction systems may be involved at the same time, such as depolymerization of sugars and starches, dehydration of monosaccharides to furane-type compounds, condensation of furane monomers with lignin or other phenolic compounds present in wood, and with each other.

A basic feature of the present invention, by which it is distinguished from processes based on the hydrolysis of wood carbohydrates, it is that sugars and starches can be transformed to a solid, insoluble in water, or a condensate with wood phenolics without using strong acids which cause wood hydrolysis with detrimental effect on wood strength. Simple sugars do not need any hydrolysis; disaccharide-sucrose is easily hydrolyzed to simple sugars at low concentration of hydrogen ion, ammonia ion and other compounds such as dimethyl formamide; and starch is hydrolyzed in hot water. Further chemical transformation of simple sugars to a solid insoluble in water takes place at much higher pH which can be created without using acids and which do not have an hydrolytic effect on wood. As a result, no wood degradation is caused and full strength of wood can be utilized. Moreover, sugars and starches when applied to wood surface to be bonded desirably form a continuous film on that surface filling cellular and other gaps and thus providing much higher level of bonding than in processes based on wood hydolysis.

It has been found that the strength of bonds formed between pieces of wood using the present invention is at least comparable to the strength of bonds achieved by hitherto used adhesives. Moreover, the bond is waterproof.

Detailed Description of Embodiments.

In the manufacture of plywood it is only necessary to cover a surface of a wood veneer with the bonding material, which may comprise a carrier liquid containing sugars and/or starches and a catalyst, bring such surface into contact with the surface of another veneer which may or may not have a coating of the bonding composition so that there is an interfacial layer of the bonding composition between the surfaces to be bonded, and press them at an elevated temperature in a conventional press for a time sufficient to achieve bonding by the transformation bonding reactions. Similarly, various forms of wood particles — coated with the bonding composition — can be so pressed in order to produce various boards.

In some cases it may be advantageous to expose wood veneers or particles covered by the liquid bonding composition to an elevated temperature for a short period of time prior to pressing. Such preheating causes partial chemical transformation of the sugars and starches which may shorten the pressing time or lower the pressing temperature required. Temperatures of preheating up to 140°C may be employed for a period of time up to 60 minutes.

The bonding composition may include a liquid carrier which is non-reactive with the lignocellulosic material or with the sugar or starch such as water, methyl alcohol and other solvents. The quantity of carrier in the bonding composition is merely that sufficient to provide a composition which can be easily handled and applied in the desired manner and at the desired rate to the wood. In general, the vapours from the carrier may readily escape from the unsealed press during the pressing operation. The adhesive-free bonding material may be dried after application and before pressing and the pressing operation may be carried out in two stages, the first stage being cold pressing and the second stage being hot pressing. Mixtures of various sugars and starches as well as mixtures of various catalysts in a carrier may be employed.

The composition may also contain other chemical reagents capable of affecting the bonding reaction, i.e. agents accelerating or reducing the extent of the reaction in which the sugars and starches participate, plasticizers or crosslinking agents, depending upon the reaction conditions which may vary widely. Such reagents may be incorporated in the desired amount in the carrier liquid together with the sugars and/or starches and the catalysts. As examples of reagents capable of accelerating the rate of reaction, there may be briefly mentioned ethylene glycol, furfuryl alcohol, amines in general, e.g. ethyl amine, n-propyl amine, cetyl amine, diethyl amine, methyl ethyl amine, diphenyl amine, triethyl amine, aniline, etc., and amine salts, e.g. methylammonium chloride, dimethylammonium bromide, trimethylammonium nitrate. monoethanolamine, n-phenyl diamine, polyvinyl alcohol, polyvinyl chloride and others.

The quantity of accelerators useful in the bonding composition is subject to very wide range and is dependent on a variety of factors including the activity of the particular accelerator and its cost, this latter factor being a highly important consideration from the point of view of providing an economically feasible product. In general, however, the quantity of accelerator will be anywhere from as little as 2% of the quantity of sugars and starches to as much as 30% of the quantity of sugars and starches, but usually will be of the order of 4—10% of the quantity of sugars and starches.

Excess amounts of sugars and starches applied to the surface of wood do not affect the efficiency of bonding, but are uneconomical. It is merely necessary to have sufficient carbohydrate and catalyst to effect the bonding reaction in a press under heat and pressure. The minimum amount of carbohydrate and catalyst required is variable depending on the pH of the wood and sugars and starches, kind and reactivity of sugars and starches, temperature moisture content of wood, desired reaction speed and other factors. The bonding material may contain substantially equal weights of sugar and starch.

The optimum amount of sugars and starches used will vary depending upon the character of the wood, reactivity or other properties of the sugars and starches used, surface roughness of the wood and the pressing conditions desired, bearing in mind that the quantity of bonding composition applied should be sufficient to fill the open cell cavities which are present on the surface of wood thus increasing the contact area between adjacent wood surfaces and substantially improving the bonding strength. In case of bonding veneers, only a film of the composition need be applied which can be conveniently done by brushing, spraying or roller spreading. Typically an amount of the bonding composition may be employed which will provide from 2 to 32 grams of sugars and starches per 1000 cm² of area.

From the preceding, it will be seen that a wide variety of sugars and starches may be employed, including monosaccharides and disaccharides, e.g.: mannose, glucose, maltose, lactose, sucrose; starches such as amylose and amylopectin, dextrin, wheat or corn flour; malosses of various origins and mixtures of sugars and starches. Inexpensive strap molasses represents an attractive possibility.

The compounds which may be used together with an alkali in the catalyst comprise dimethyl formamide with iodine, dimethyl sulfoxide, propylene oxide with ethylene glycol and zinc chloride, aluminum chloride, ammonium chloride, ammonium nitrate, sodium nitrate, potassium nitrate, ammonium sulfate, potassium tartrate, sodium phosphate, calcium phosphate, sodium sulfate, zinc chloride, diammonium phosphate, superphosphate and mixtures thereof. It is preferred to use the ammonium or sodium salts. Nitrates and phosphates are most effective and economical. Phosphates in addition to catalyzing sugar and starch transformation, also provide to some degree fire retardant treatment to the wood.

The adhesive-free bonding material may be substantially dry and comprise a mixture of sugar or starch, aluminum chloride and ethylene glycol.

The amount of catalyst present is generally from 1 to 50% by weight based on the sugars and starches and particularly in cases when a higher degree of fire retardancy is desired up to 100% or even more; the preferred ratio depends on the identity of sugars and starches and the kind of catalyst. It is preferred to keep the amount of catalyst used to the minimum level necessary to catalyze the sugar and starch transformation into the furane type compounds and their polymerization. A large excess of catalyst without buffering may be harmful to wood strength over a long period of time. The transformation of polymeric starches, such as potato starch, into furane type compounds requires a somewhat higher proportion of catalyst than simpler sugars, such as glucose or sucrose, for a given reaction rate.

It has now been found that chemical transformation of sugars and starches should take place at Ph which are close to natural pH of wood, i.e. 3.5—5.5. In order to maintain the pH in the desired range, alkalis are used. For example, a 20% water solution of ammonium nitrate has a pH of about 6.5 At higher temperature ammonium nitrate dissociates and the pH goes down to about 2. If the pH of the solution is increased to about 10.5 by adding alkali, e.g. sodium or ammonium hydroxide, the pH at higher temperatures drops to the level of the wood pH so that pH of the product is between 3.5—5.5 depending upon the pH of wood. Maintaining the pH of the liquid carrier and the final product at the proper level eliminates any hydrolytic effect with its resulting strength decrease of wood, and this is of crucial importance for bond quality.

In a preferred embodiment of the invention, a mixture of sugars and starches, such as sucrose and wheat flour, is used. It is advantageous to use sugars and starches of approximately the same decomposition rate. Simple sugar and starches are preferred to polymeric ones because of their higher decomposition rate. Price and availability, however, are probably the most important factors in deciding which raw material to use.

Pressing conditions in the press will vary widely depending upon variables, such as kind of sugars and starches, kind of wood, kind and amount of catalyst and requirements on the product. As usual for any given system, the lower the temperature, the longer the pressing time and vice versa. The pressing temperature should not exceed the temperature at which charring of the lignocellulosic material will occur nor should the pressure exceed that at which the desired specific gravity of the product is exceeded. The preferred temperature range is 140 to 250°C and the preferred pressure range 5 to 50 kg/cm². The pressing time required under these conditions is a time needed to rise the core temperature at which chemical transformation of sugars and starches to a solid insoluble in water takes place, which is 160 to 212°C depending upon the kind and amount of catalyst. The pressing time required is typically from 0.2 to 2 minutes per mm thickness of lignocellulosic material.

The invention may be applied to any kind of wood bonding such as in plywood or composite board production. In the production of composite products such as particle or fiber boards, the same procedure is followed as for plywood manufacture except that the particles are covered by the carrier containing sugars and starches and catalyst which can be achieved by spraying and mixing followed by board formation and pressing in the press.

An embodiment of the invention will be described by way of illustration in the following Example. Percentages are given by weight.

### Example

Wood particles having a form of wood fiber produced by thermomechanical process such as that of Asplund Defibrator, with a moisture content of 6%, were sprayed with water solution containing 36% of sucrose and 10% of ammonium nitrate, buffered to pH 10.5 by adding sodium hydroxide. Total amount sprayed (of the solution) was 15% in relation to oven- dried weight of fiber. After air drying to a moisture content of about 8%, the fiber mat was hand-formed and 6.3 mm thick hardboard pressed from the mat at a temperature of 232°C and at a pressure of ca 38.5 to 10.5 kg/cm², for 3½ minutes. Hardboard had the following properties: specific gravity 1.05; modulus of rupture 294 kg/cm², modulus of elasticity 37,000 kg/cm²; internal bond 11.9 kg/cm²; thickness swelling after 24 hours soaking in water 12% and after 2 hours of boiling in water 24.5%.

It is apparent that the addition of a small amount of sugar and/or starch and catalyst to the surfaces to be bonded leads to bond formation under heat and pressure. The strength of the bond is comparable to the strength achieved by traditional adhesives and the bonds are resistant to water. The economical advantage of such a system is great because the price of sugars and starches applicable in this bonding system represents only about 1/2 to 1/9 of the price of the most extensively used adhesives such as urea or phenol formaldehyde adhesives.

## Claims

1. A method of bonding solid lignocellulosic materials and thereby producing a waterproof bond which comprises providing on a surface of said solid lignocellulosic material an adhesive free bonding material consisting essentially of at least one sugar, starch or mixture thereof and an amount sufficient to catalyze transformation of the sugar or starch of a catalyst capable of transformation of the sugar or starch to cause waterproof bonding of adjacent lignocellulosic surfaces by means of the intermediate layer of adhesive free bonding material therebetween, said catalyst comprising a mixture of an alkali and a compound selected from the group consisting of dimethyl formamide with iodine, dimethyl sulfoxide, propylene oxide with ethylene glycol and zinc chloride, aluminum chloride, ammonium chloride, ammonium nitrate, sodium nitrate, potassium nitrate, ammonium sulfate, potassium tartrate, sodium phosphate, calcium phosphate, sodium sulfate, zinc chloride, diammonium phosphate, superphosphate and mixtures thereof so that said bonding material will not decrease pH after heating of the solid lignocellulosic material to below 3.5, and pressing surfaces of the lignocellulosic material together at an elevated temperature and for a time sufficient to effect said bonding by said transformation reactions of the sugar or starch and wherein the time, temperature and pressure are sufficient to produce a waterproof bond.

2. A method according to Claim 1, in which the sugar or starch is selected from disaccharides, monosaccharides, molasses and starch obtained from wheat or corn flour.

3. A method according to Claim 1 or 2, in which the adhesive free bonding material con-

tains at least one sugar and at least one starch.

4. A method according to Claim 3, in which the adhesive free bonding material contains substantially equal weight of sugar and starch.

5. A method according to any one of Claims 1 to 4, in which the amount of catalyst present is from 1 to 50% by weight of the amount of sugar and starch in the adhesive-free bonding material.

6. A method according to any preceding claim, in which the adhesive-free bonding material contains a liquid carrier which does not react with the sugar or starch.

7. A method according to Claim 6, in which the liquid carrier is selected from water and methanol.

8. A method according to any preceding claim, in which the adhesive-free bonding material is applied to the surface in an amount to give from 2 to 32 grams of sugar, starch, or mixture thereof per 1000 cm² of surface.

9. A method according to any preceding claim, in which the surfaces are pressed together at a temperature from 140 to 250°C and a pressure from 5 to 50 kg/cm².

10. A method according to any preceding claim, in which the time of pressing is from 0.2 to 2 minutes per mm thickness of lignocellulosic material.

11. A method according to any preceding claim, in which the lignocellulosic material is heated after application of the adhesive-free bonding material and before pressing.

12. A method according to Claim 11, in which the lignocellulosic material is heated at a temperature not exceeding 140°C for a period up to 60 minutes.

13. A method according to any preceding claim, in which the lignocellulosic material comprises wood veneers which are laminated together during the pressing.

14. A method according to Claim 13, in which the adhesive-free bonding material is applied to one only of the respective veneer surfaces which are pressed together.

15. A method according to any one of Claims 1 to 12, in which the lignocellulosic material comprises particles of wood.

16. A method according to any preceding claim wherein said catalyst comprises aluminium chloride.

17. A method according to any preceding claim, wherein said adhesive-free bonding material further comprises a non-reactive liquid carrier and said pressing is carried out in an unsealed press to permit the escape of vapours of said liquid carrier.

18. A method according to Claim 17, wherein said adhesive-free bonding material is dried after application and before pressing and the pressing operation is carried out in two stages, the first stage being cold pressing and the second stage being hot pressing.

19. A method according to any preceding claim, wherein said sugar starch, or mixture thereof comprises strap molasses.

20. A method according to any preceding claim, wherein said adhesive-free bonding material further comprises an accelerating reagent.

21. A method according to Claim 20, wherein said accelerating reagent is selected from the group consisting of ethylene glycol and amines.

22. A method according to Claim 21, wherein said adhesive-free bonding material is substantially dry and comprises a mixture of said sugar or starch, aluminium chloride and ethylene glycol.

23. A method according to any preceding claim, wherein said composition is applied in an amount sufficient to fill surface voids of said lignocellulosic material.

**Revendications**

1. Procédé pour coller des matières lignocellulosiques solides et produire ainsi un collage à l'épreuve de l'eau, qui comprend l'application, sur une surface de cette matière lignocellulosique solide, d'une matière collante exempte d'adhésif qui consiste essentiellement en au moins un sucre, de l'amidon ou un mélange de ceux-ci et, en une quantité suffisante pour catalyser la transformation du sucre ou de l'amidon, en un catalyseur capable de transformer le sucre ou l'amidon pour provoquer le collage à l'épreuve de l'eau des surfaces lignocellulosiques adjacentes au moyen de la couche intermédiaire de matière collante exempte d'adhésif, lequel catalyseur comprend un mélange d'un alcali et d'un composé choisi dans la classe formée par le diméthylformarnide avec l'iode, le diméthylsulfoxyde, l'oxyde de propylène avec l'éthylèneglycol et le chlorure de zinc, le chlorure d'aluminium, le chlorure d'ammonium, le nitrate d'ammonium, le nitrate de sodium, le nitrate de potassium, le sulfate d'ammonium, le tartrate de potassium, le phosphate de sodium, le phosphate de calcium, le sulfate de sodium, le chlorure de zinc, le phosphate diammonique, le superphosphate et leurs mélanges, de façon que matière collante ne baisse pas jusqu'à un pH intérieur à 3,5 après chauffage de la matière lignocellulosique solide, et le pressage des surfaces de la matière cellulosique ensemble à une température élevée et pendant une durée suffisante pour provoquer le collage par ces réactions de transformation du sucre ou de l'amidon; la durée, la température et la pression étant suffisantes pour former un collage à l'épreuve de l'eau.

2. Procédé suivant la revendication 1, dans lequel le sucre au amidon est choisi, parmi les disaccharides, le monosaccharides, le mélasse et l'amidon provenant de la farine de froment ou de maïs.

3. Procédé suivant la revendication 1 ou 2, dans lequel la matière collante exempte d'adhésif contient au moins un sucre et au moins un amidon.

4. Procédé suivant la revendication 3, dans lequel la matière collante exempte d'adhésif contient des poids sensiblement égaux de sucre et d'amidon.

5. Procédé suivant l'une quelconque des revendications 1 à 4, dans lequel la quantité de catalyseur en présence est de 1 à 50% du poids de la quantité de sucre et d'amidon dans la matière collante exempte d'adhésif.

6. Procédé suivant l'une quelconque des revendications précédentes, dans lequel la matière collante exempte d'adhésif contient un véhicule liquide qui ne réagit pas avec le sucre ou l'amidon.

7. Procédé suivant la revendication 6, dans lequel le véhicule liquide est choisi entre l'e et le méthanol.

8. Procédé suivant l'une quelconque d e- vendications prédédentes, dans lequel la matière collante exempte d'adhésif est appliquée sur la surface en quantité apportant 2 à 32 g de sucre, d'amidon ou de mélange de ceux-ci pour 1.000 cm² de surface.

9. Procédé suivant l'une quelconque des revendications précédentes, dans lequel les surfaces sont pressées ensemble à une température de 140 à 250°C sous une pression de 5 à 50 kg/cm².

10. Procédé suivant l'une quelconque des revendications précédentes, dans lequel la durée du pressage est de 0,2 à 2 minutes par mm d'épaisseur de la matière lignocellulosique.

11. Procédé suivant l'une quelconque des revendications précédentes, dans lequel la matière lignocellulosique est chauffée après l'application de la matière collante exempte d'adhésif et avant le pressage.

12. Procédé suivant la revendication 11, dans lequel la matière lignocellulosique est chauffée à une température n'excédant pas 140°C pendant une durée s'élevant jusqu'à 60 minutes.

13. Procédé suivant l'une quelconque des revendications précédentes, dans lequel la matière lignocellulosique comprend des feuillets de bois de placage qui sont stratifiés ensemble pendant le pressage.

14. Procédé suivant la revendication 13, dans lequel la matière collante exempte d'adhésif est appliquée sur une seule des faces des feuillets de placage respectifs qui sont pressés ensemble.

15. Procédé suivant l'une quelconque des revendications 1 à 12, dans lequel la matière lignocellulosique comprend des particules de bois.

16. Procédé suivant l'une quelconque des revendications précédentes, dans lequel le catalyseur comprend du chlorure d'aluminium.

17. Procédé suivant l'une quelconque des revendications précédentes, dans lequel la matière collante exempte d'adhesif comprend, en outre, un véhicule liquide non réactif et le pressage est exécuté dans une presse non scellée pour permettre le dégagement des vapeurs du véhicule liquide.

18. Procédé suivant la revendication 17, dans lequel la matière collante exempte d'adhésif est séchée après son application et avant le pressage et les opérations de pressage sont exécutées en deux stades, le premier stade étant un pressage à froid et le second stade étant un pressage à chaud.

19. Procédé suivant l'une quelconque des revendications précédentes, dans lequel le sucre, l'amidon ou leur mélange comprend de la mélasse noire.

20. Procédé suivant l'une quelconque des revendications précédentes, dans lequel la matière collante exempte d'adhésif comprend, en outre, un réactif accélérateur.

21. Procédé suivant la revendication 20, dans lequel le réactif accélérateur est choisi dans la classe formée par l'éthylèneglycol et les amines.

22. Procédé suivant la revendication 21, dans lequel la matière collante exempte d'adhésif est sensiblement sèche et comprend un mélange de ce sucre ou amidon, de chlorure d'aluminium et d'éthylèneglycol.

23. Procédé suivant l'une quelconque des revendications précédentes, dans lequel la composition est appliquée en quantité suffisante pour obturer les cavités superficielles de la matière lignocellulosique.

**Patentansprüche**

1. Verfahren zum Verbinden von festen Lignocellulosematerialien unter Erzeugung einer wasserfesten Bindung, bei welchem Verfahren auf einer Oberfläche des festen Lignocellulosematerials ein klebstofffreies Bindemittel vorgesehen wird, das im wesentlichen besteht aus mindestens einem Zucker, einer Stärke oder einer Mischung hiervon und einer zum Katalysieren der Umwandlung des Zuckers oder der Stärke ausreichenden Menge eines Katalysators, de befähigt ist zur Umwandlung des Zuckers oder der Stärke für das Bewirken einer wasserfesten Verbindung von angrenzenden Lignocelluloseoberglächen mittels der dazwischenliegenden intermediären Schicht aus klebstofffreiem Bindemittel, welcher Katalysator eine Mischung enthält aus einem Alkali und einer Verbindung gewählt aus der Gruppe bestehend aus Dimethylformamid mit Jod, Dimethylsulfoxid, Propylenoxid mit Ethylenglycol und Zinkchlorid, Aluminiumchlorid, Ammoniumchlorid, ammoniumnitrat, Natriumnitrat, Kaliumnitrat, Ammoniumsulfat, Kaliumtartrat, Natriumphosphat, Calciumphosphat, Natriumsulfat, Zinkchlorid, Diammoniumphosphat, Superphosphat und Mischungen heirvon, so dass das Bindemittel dem pH-Wert nach dem Erhitzen des festen Lignocellulosematerials nicht unter 3,5 vermindert, und Verpressen von Oberflächen des Lignocellulosematerials bei einer zum Bewirken der Verbindung durch die Umwandlungsreaktionen des Zuckers oder der Stärke ausreichenden erhöhten Temperatur und Zeitdauer, wobei die Dauer, die Temperatur und der Druck zum Erzeugen einer wasserfesten Verbindung ausreichen.

2. Verfahren nach Anspruch 1, in welchem der Zucker oder die Stärke gewählt ist aus Disacchariden, Monosacchariden, melasse und Weisen- oder Maisstärke.

3. Verfahren nach Anspruch 1 oder 2, in welchem das kelbstofffreie Bindemittel mindestens eine Zucker und mindestens eine Stärke enthält.

4. Verfahren nach Anspruch 3, in welchem das klebstofffreie Bindemittel Zucker und Stärke in praktisch gleichen Gewichtsanteilen enthält.

5. Verfahren nach einem der Ansprüche 1—4, in welchem der Anteil des vorhandenen Katalysators 1 bis 50 % des Gewichts der Menge an Zucker und Stärke in dem klebstofffreien Bindemittel beträgt.

6. Verfahren nach einem der vorangehenden Ansprüche, in welchem das klenstofffreie Bindemittel einen flüsisigen träger enthält, der mit dem Zucker oder der Stärke nicht reagiert.

7. Verfahren nach Anspruch 6, in welchem der flussige Träger gewählt ist aus Wasser und Methanol.

8. Verfahren nach einem der vorangehenden Ansprüche, in welchem das klenstofffreie Bindemittel in einer solchen Menge auf die Oberfläche aufgetragen wird, dass pros 1000 cm² der Oberfläche 2 bis 32 g Zucker, Stärke oder Mischung hiervon vorliegen.

9. Verfahren nach einem der vorangehenden Ansprüche, in welchem die Oberflächen bei einer Temperatur von 140 bis 250°C und einem Druck von 5 bis 50 kg/cm² zusammengepresst werden.

10. Verfahren nach einem der vorangehenden Ansprüche, in welchem die Pressdauer 0,2 bis 2 Minuten pro mm der Dicke des Lignocellulosematerials beträgt.

11. Verfahren nach einem der vorangehenden Ansprüche, in welchem das Lignocellulosematerial nach dem Auftragen des Klebstofffreien Bindemittels und vor dem Pressen erhitzt wird.

12. Verfahren nach Anspruch 11, in welchem das Lignocellulosematerial während einer Zeitspanne von bis zu 60 Minuten auf eine Temperatur von nicht über 140°C erhitzt wird.

13. Verfahren nach einem der vorangehenden Ansprüche, in welchem das Lignocellulosematerial Holzfurniere enthält, die während des Pressens miteinander laminiert werden.

14. Verfahren nach Anspruch 13, in welchem das klebstofffreie Bindemittel nur auf eine der jeweils zusammengepressten Furnieroberflächen aufgetragen wird.

15. Verfahren nach einem der Ansprüche 1—12, in welchem das Lignocellulosematerial Holzpartikel enthält.

16. Verfahren nach einem der vorangehenden Ansprüche, in welchem der Katalysator Aluminiumchlorid enthält.

17. Verfahren nach einem der vorangehenden Ansprüche, in welchem das klebstofffreie Bindemittel ausserdem einem nichtreaktiven flüssigen Träger enthält und das Pressen in einer offenen Presse durchgeführt wird, um das Abziehen von Dampf des flüssigen Trägers zu gestatten.

18. Verfahren nach Anspruch 17, in welchem das klebstofffreie Bindemittel nach dem Auftragen und vor dem Pressen getrocknet wird und das Pressen in zwei Stufen erfolgt, deren erste eine Kaltpressung und deren zweite eine Heisspressung ist.

19. Verfahren nach einem der vorangehenden Ansprüche, in welchem der Zucker, die Stärke oder die Mischung hiervon Melasse bzw. Melassenrückstand enthält.

20. Verfahren nach einem der vorangehenden Ansprüche, in welchem das klebstofffreie Bindemittel ausserdem einen Beschleuniger enthält.

21. Verfahren nach Anspruch 20, in welchem der Beschleuniger gewählt ist aus der Gruppe bestehend aus Ethylenglycol und Aminen.

22. Verfahren nach Anspruch 21, in welchem das klebstofffreie Bindemittel im wesentlichen trocken ist und eine Mischung aus dem Zucker oder der Stärke, Aluminiumchlorid und Ethylenglycol enthält.

23. Verfahren nach einem der vorangehenden Ansprüche, in welchem das Mittel in einer Menge aufgetragen wird, die zur Füllung von Hohlstellen in der Oberfläche des Lignocellulosematerials ausreicht.